# EUROPEAN PATENT SPECIFICATION

(11) **EP 1 320 563 B1**
(45) Date of publication and mention of the grant of the patent: **13.12.2006**
(21) Application number: 01981159.5
(22) Date of filing: 24.09.2001
(51) Int. Cl.: C08G 18/48, C08G 18/67, C09D 175/16, C08F 290/06

(54) **LIQUID CURABLE RESIN COMPOSITION AND CURED PRODUCTS**
FLÜSSIGE, HÄRTBARE HARZZUSAMMENSETZUNGEN UND GEHÄRTETE PRODUKTE
COMPOSITION DE RESINE DURCISSABLE, LIQUIDE, ET PRODUITS DURCIS

(30) Priority: 26.09.2000 JP 2000291391
(43) Date of publication of application: 25.06.2003
(73) Proprietor: DSM IP Assets B.V., 6411 TE Heerlen (NL); JSR Corporation, Tokyo 104-0045 (JP)
(72) Inventor: SUGIMOTO, Masanobu, Ibaraki 305-0051 (JP); HASHIGUCHI, Yuichi, Tokyo 104-8410 (JP); KOMIYA, Zen, Ibaraki 305-0045 (JP); UKACHI, Takashi, Baraki 300-1216 (JP)
(74) Representative: Hoogendam, Gerrie Christine
(86) International application number: PCT/NL2001/000702
(87) International publication number: WO 2002/026854

(56) References cited:
- EP-A- 0 860 485
- WO-A-98/39264
- PATENT ABSTRACTS OF JAPAN vol. 016, no. 249 (C-0948), 8 June 1992 (1992-06-08) & JP 04 057817 A (JAPAN SYNTHETIC RUBBER CO LTD;OTHERS: 01), 25 February 1992 (1992-02-25)

## Description

### TECHNICAL FIELD OF THE INVENTION

The present invention relates to a liquid curable resin composition which can produce a cured product with excellent surface properties The present invention further relates to cured products made from said liquid curable resin compositions.

### BACKGROUND OF THE INVENTION

In the fabrication of optical fibers, a resin coating is applied for protection and reinforcement immediately after spinning molten glass fibers. In producing optical fiber products, up to four, and possibly more, resin coating compositions may be applied onto each fiber strand.

The first coating, commonly referred to as an inner primary coating (also referred to as, simply, a primary coating), is applied directly onto the optical fiber. This coating is usually a soft coating having a low glass transition temperature, and provides resistance to microbending. Microbending is undesirable, as it can lead to attenuation of the signal transmission capability of the optical fiber.

Thereafter, and optionally, an outer primary coating (also referred to as a secondary coating) may be applied. This coating is typically harder than the primary coating, and provides resistance to handling. A color is often incorporated into the outer primary coating to assist in identification. A third coating, usually referred to as an ink, is optionally applied onto the outer primary coating, but may be applied onto the inner primary coating in the absence of an outer primary coating. The ink provides an ancillary means of identifying the fiber. Finally, a plurality of the foregoing fibers is arranged, usually in parallel.

A fourth type of coating composition, commonly referred to as matrix material, is applied to the arranged fibers. The matrix material maintains the fibers in a spaced configuration, commonly referred to as a ribbon or ribbon matrix. If desired, one or more ribbons may be arranged in parallel and joined by either edge coating or by encapsulation using the same or different matrix material, which is also called outer matrix material. The ribbon matrix material may also be referred to as inner matrix material. The outer matrix material may be referred to as bundling matrix material or encapsulating matrix material. These ribbons, which may be bundled to form cables, facilitate the handling and installation of optical fibers.

The characteristics required for such a bundling material include, in addition to various characteristics required for conventional optical fibers, sufficient transparency to allow discrimination of colors of optical fibers, capability of producing cured products with a smooth surface at a high speed, and capability of being smoothly wound or rewound without causing the optical fiber ribbon to adhere to other optical fibers in a production line.

Conventionally, a polysiloxane has been added as a coating surface improver to improve surface properties, particularly to reduce adhering force of coatings. A problem with polysiloxanes resides in that some polysiloxanes exhibits poor compatibility with other components causing a liquid resin composition to become turbid, which may result in impaired leveling properties of coating surfaces.

The increase in the demand of optical fibers in recent years requires production of a large quantity of optical fibers.at a higher speed. Because of these reasons, the requirements for the above characteristics for a bundling material are increasing.

### SUMMARY OF THE INVENTION

An object of the present invention is to provide a liquid curable resin composition capable of producing a transparent cured product exhibiting a smooth surface which does not adhere to other cured surfaces.

Another object of the present invention is to provide a liquid curable resin composition suitable for a bundling matrix material, ribbon matrix material, outer primary coating or ink for optical fibers.

First, the above objects and advantages can be achieved in the present invention by a liquid curable resin composition comprising:
(A) a urethane (meth)acrylate, obtained by the reaction of
   (i) a diol compound represented by the following formula (1), 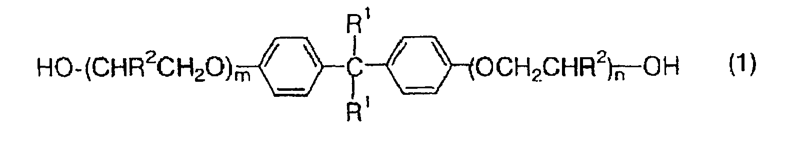 wherein R¹s individually represent a hydrogen atom or a methyl group, R²s individually represent a hydrogen atom, a methyl group, or a propyl group, and m and n individually is a number from 5 to 95, provided that the total of m and n is 20-100,
   (ii) a diisocyanate compound, and
   (iii) a hydroxyl group-containing (meth)acrylate compound,
(B) a polysiloxane having a number average molecular weight of 200-100,000, and
(C) a monomer polymerizable with the urethane (meth)acrylate (A).

Secondly, the above objects and advantages can be achieved by the cured product of the liquid curable resin composition of the present invention.

### DETAILED DESCRIPTION OF THE INVENTION AND THE PREFERRED EMBODIMENTS

The urethane (meth)acrylate used as the component (A) in the present invention (hereinafter may also be called "urethane (meth)acrylate (A)") is produced by reacting (a) a diol compound of the above formula (1) (hereinafter may also be called "diol (a)"), (b) a diisocyanate compound, and (c) a (meth)acrylate compound containing a hydroxyl group. Specifically, the urethane (meth)acrylate is produced by reacting the isocyanate groups in the diisocyanate compound with the hydroxyl groups in the diol (a) and the hydroxyl groups in the hydroxyl group-containing (meth)acrylate.

This reaction is carried out, for example, by charging the diol (a), diisocyanate, and hydroxyl group-containing (meth)acrylate and reacting them altogether; reacting the diol (a) and diisocyanate, and reacting the resulting product with the hydroxyl group-containing (meth)acrylate; reacting the diisocyanate and hydroxyl group-containing (meth)acrylate, and reacting the resulting product with the diol (a); and reacting the diisocyanate and hydroxyl group-containing (meth)acrylate, reacting the resulting product with the diol (a), and further reacting the resulting product with the hydroxyl group-containing (meth)acrylate.

As examples of diol (a), ethylene oxide addition diol of bisphenol A, butylene oxide addition diol of bisphenol A, ethylene oxide addition diol of bisphenol F, butylene oxide addition diol of bisphenol F, and the like can be given.

The repeating units m and n in the formula (1) are independently a numeral of 5 to 95, provided that the sum of m and n is 20 or greater, preferably the sum of n and m is 22 or greater, and more preferably the sum of n and m is 25 or greater. In addition, the sum of n and m is preferably 100 or smaller, more preferably said sum is 60 or smaller, even more preferably said sum is 50 or smaller and particularly preferred the sum of m and n is 40 or smaller. If the total sum of the repeating units is more than 100, water absorption of the cured products increases and hardness under high temperature and highly humid conditions may remarkably decrease. If the total sum of the repeating units is less than 20, the resulting urethane (meth)acrylate may exhibit impaired compatibility with polysiloxane of the component (B) and may cause the liquid resin to become turbid. Of the above diols, diols having a bisphenol A structure are particularly preferable. Commercially available diols include, for example, Uniol DA1500 (manufactured by Nippon Oil and Fats Co., Ltd.) and 4,4'-bis(polyoxyethylene glycol)bisphenol ether (n=20-100) (manufactured by Daiichi Kogyo Seiyaku Co., Ltd.).

Examples of the diisocyanate compounds used in the component (A) include, but are not limited to, 2,4-tolylene diisocyanate, 2,6-tolylene diisocyanate, 1 ,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexylisocyanate), 2,2,4-trimethylhexamethylene diisocyanate, bis(2-isocyanatethyl) fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylylene diisocyanate, and the like. Of these, 2,4-tolylene diisocyanate, isophorone diisocyanate, xylylene diisocyanate, and methylenebis(4-cyclohexylisocyanate) are especially desirable.

Examples of the hydroxyl group-containing (meth)acrylates (c) used in the component (A) include, but are not limited to, 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butanediol mono(meth)acrylate, 2-hydroxyalkyl (meth)acryloyl phosphate, 4-hydroxycyclohexyl (meth)acrylate, 1,6-hexanediol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta(meth)acrylate, and (meth)acrylates shown by the following formula (2) or (3):

CH₂=C(R³)-COOCH₂CH₂-(OCOCH₂CH₂CH₂CH₂CH₂)ᵣ-OH (2)

CH₂=C(R³)-COOCH₂CH-(OH)CH₂-O-(C₆H₅) (3)

wherein R³ represents a hydrogen atom or a methyl group, and r represents a numeral of 1-15. Compounds obtained by the addition reaction of (meth)acrylic acid and a compound containing a glycidyl group such as alkyl glycidyl ether, allyl glycidyl ether, glycidyl (meth)acrylate, and the like can also be used. Of these hydroxyl group-containing (meth)acrylates, 2-hydroxyethyl (meth)acrylate and 2-hydroxypropyl (meth)acrylate are particularly preferable.

The proportion of the diol (a), diisocyanate, and hydroxyl group-containing (meth)acrylate is preferably determined so that isocyanate groups in the diisocyanate and hydroxyl groups in the hydroxyl group-containing (meth)acrylate are 1.1-3 equivalents and 0.2-1.5 equivalents respectively for one equivalent of hydroxyl groups in the polyol. It is preferable that the equivalent of hydroxyl groups in the diol and the hydroxyl group-containing (meth)acrylate be almost equal to the equivalent of isocyanate groups in the diisocyanate.

In the reaction of the diol (a), diisocyanate, and hydroxyl group-containing (meth)acrylate, it is preferable to use a urethanization catalyst such as copper naphthenate, cobalt naphthenate, zinc naphthenate, di-n-butyltin dilaurate, triethylamine, 1,4-diazabicyclo[2.2.2]octane, and 2,6,7-trimethyl-1,4-diazabicyclo[2.2.2]octane in an amount from 0.01 to 1 part by weight for 100 parts by weight of the reactants. The reaction is carried out at 10-90°C, and preferably at 30-80°C.

In addition to the urethane (meth)acrylate (A), other urethane (meth)acrylates having a polyol structure which differs from the polyol structure in the urethane (meth)acrylate (A) may be used in the present invention. Such other urethane (meth)acrylates can be prepared by adding a polyol other than the diol (a) when preparing the urethane (meth)acrylate (A).

As the polyols in such other urethane (meth)acrylates having a structure differing from the polyol structure in the urethane (meth)acrylate (A), polyether polyols having a different structure from the polyol shown by the formula (1) can be given. Triols, tetraols, and the like are included, in addition to diols. Examples of polyether diols other than the diol (a) include polyethylene glycol, polypropylene glycol, polytetramethylene glycol, polyhexamethylene glycol, polyheptamethylene glycol, polydecamethylene glycol, polyether diols obtained by the ring-opening copolymerization of two or more ion-polymerizable cyclic compounds, and the like. Examples of the above ion-polymerizable cyclic compounds include cyclic ethers such as ethylene oxide, propylene oxide, butene-1-oxide, isobutene oxide, 3,3-bis(chloromethyl)oxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyl oxetane, vinyl tetrahydrofuran, vinyl cyclohexene oxide, phenyl glycidyl ether, butyl glycidyl ether, and glycidyl benzoate. Polyether diols obtained by ring-opening copolymerization of these ion-polymerizable cyclic compounds and cyclic imines such as ethyleneimine, cyclic lactonic acids such as β-propyolactone and glycolic acid lactide, or dimethylcyclopolysiloxanes can also be used. Examples of specific combinations of the above two or more ion-polymerizable cyclic compounds include combinations of tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, butene-1-oxide and ethylene oxide, a ternary copolymer of tetrahydrofuran, butene-1-oxide, and ethylene oxide, and the like. The ring-opening copolymers of the ion-polymerizable cyclic compounds may be either a random copolymer or a block copolymer.

The polyether diol compounds mentioned above are also commercially available under the trade names such as PTMG 1000, PTMG 2000 (manufactured by Mitsubishi Chemical Corp.), PPG1000, EXCENOL2020, 1020 (manufactured by Asahi Glass Urethane Co., Ltd.), PEG1000, Unisafe DC1100, DC1800 (manufactured by Nippon Oil and Fats Co., Ltd.), PPTG2000, PPTG1000, PTG400, PTGL2000 (manufactured by Hodogaya Chemical Co., Ltd.), and Z-3001-4, Z-3001-5, PBG2000A, PBG2000B (manufactured by Daiichi Kogyo Seiyaku Co., Ltd.).

In addition to the above-mentioned polyether diols, polyester diols, polycarbonate diols, polycaprolactone diols, diols having a linear hydrocarbon, diols having a cyclic structure, and the like can be given as examples of polyols other than the diol (a).

As examples of polyester diols, polyester polyols obtained by reacting a polyhydric alcohol such as ethylene glycol, polyethylene glycol, propylene glycol, polypropylene glycol, tetramethylene glycol, polytetramethylene glycol, 1,6-hexanediol, neopentyl glycol, 1,4-cyclohexanedimethanol, 3-methyl-1,5-pentanediol, 1,9-nonanediol, and 2-methyl-1,8-octanediol, and the like with a polybasic acid such as phthalic acid, isophthalic acid, terephthalic acid, maleic acid, fumaric acid, adipic acid, and sebacic acid, and the like can be given. These polyester polyols are commercially available as Kurapol P-2010, PMIPA, PKA-A, PKA-A2, PNA-2000 (manufactured by Kuraray Co., Ltd.), and the like.

Examples of polycarbonate diols include polycarbonate of polytetrahydrofuran, polycarbonate of 1,6-hexanediol, and the like, and commercially available products such as DN-980, 981, 982, 983 (manufactured by Nippon Polyurethane Industry Co., Ltd.), PC-8000 (manufactured by PPG of the US), and PC-THF-CD (manufactured by BASF).

Examples of polycaprolactone diols include polycaprolactone diols obtained by reacting ε-caprotactone and a dihydric diol such as ethylene glycol, polyethylene glycol, propylene glycol, polypropylene glycol, tetramethylene glycol, polytetramethylene glycol, 1,2-polybutylene glycol, 1,6-hexanediol, neopentyl glycol, 1,4-cyclohexanedimethanol, or 1,4-butanediol. These diols are commercially available under the trade names such as PLACCEL 205, 205AL, 212, 212AL, 220, 220AL (manufactured by Daicel Chemical Industries, Ltd.), for example.

As examples of diols of linear hydrocarbon, ethylene glycol, propylene glycol, 1,4-butanediol, 1,5-pentanediol, 1,6-hexanediol, neopentyl glycol, and the like can be given.

As examples of diols having a cyclic structure, ethylene oxide addition diols of bisphenol A, butylene oxide addition diols of bisphenol A, ethylene oxide addition diols of bisphenol F, and butylene oxide addition diols of bisphenol F, each having ethylene oxide or butylene oxide recurring units, corresponding to the sum of m and n in the formula (1), in the number of less than 20 or more than 100, can be given. Namely, these are diols with a smaller or larger number of ethylene oxide or butylene oxide addition than to the diols (a). Furthermore, ethylene oxide addition compounds of trimethylolpropane, propylene oxide addition compounds of trimethylolpropane, butylene oxide addition compounds of trimethylolpropane, ethylene oxide addition compounds of glycerin, propylene oxide addition compounds of glycerin, butylene oxide addition compounds of glycerin, ethylene oxide addition compounds of pentaerythritol, propylene oxide addition compounds of pentaerythritol, butylene oxide addition compounds of pentaerythritol, and the like can be given. In addition to these compounds, ethylene oxide addition diols of bisphenol A and tricyclodecanedimethanol are given as preferable diols having a cyclic structure. These diols other than the diols (a) can be commercially available as Uniol DA400, DA700, DA1000 (manufactured by Nippon Oil and Fats Co., Ltd.), tricyclodecanedimethanol (manufactured by Mitsubishi Chemical Corp.), and the like.

As examples of the above triols, in addition to trimethylolpropane, ethylene oxide addition compounds of trimethylolpropane, propylene oxide addition compounds of trimethylolpropane, butylene oxide addition compounds of trimethylolpropane, glycerin, ethylene oxide addition compounds of glycerin, propylene oxide addition compounds of glycerin, butylene oxide addition compounds of glycerin, and the like, to which a small number of moles of ethylene oxide, propylene oxide, or butylene oxide is added, can be given.

As examples of the above tetraols, ethylene oxide addition compounds of pentaerythritol, propylene oxide addition compounds of pentaerythritol, butylene oxide addition compounds of pentaerythritol, glycerin, tetrahydroxyisopropylethylenediamine, and the like can be given.

A urethane di(meth)acrylate obtained by reacting 1 mol of the diisocyanate with 2 mols of the hydroxyl group-containing (meth)acrylate may be added to the liquid curable resin composition of the present invention. Examples of such a urethane di(meth)acrylate include a reaction product of hydroxyethyl (meth)acrylate and 2,4-tolylene diisocyanate, reaction product of hydroxyethyl (meth)acrylate and isophorone diisocyanate, reaction product of hydroxypropyl (meth)acrylate and 2,4-tolylene diisocyanate, and reaction product of hydroxypropyl (meth)acrylate and isophorone diisocyanate.

An example of a suitable radiation-curable oligomer (A) includes an urethane oligomer having a molecular weight of at least about 1,200 and containing at least one ethylenically unsaturated group that can be polymerized through actinic radiation. Preferably, the oligomer (A) has two terminal radiation-curable functional groups, one at each end of the oligomer. Preferably, the molecular weight of the oligomer (A) is at least about 1,300 and at most about 15,000 Daltons. More preferably the molecular weight is between about 1,500 and about 10,000, and most preferably, between about 2,000 and 7,000 Daltons. Molecular weight, as used throughout this application, is the calculated molecular weight of the molecule concerned. In the case of a polymer structure, it is the calculated average molecular weight of the expected structure based on the starting materials and the reaction conditions. The molecular weight can also be determined using conventional techniques. The viscosity of the compound (A) used in the present invention is preferably 1-100 Pa·s at 25°C, still more preferably 3-50 Pa·s at 25°C, and particularly preferably 5-40 Pa·s at 25°C. Any polysiloxane may be used as the component (B), insofar as such a polysiloxane has a number average molecular weight measured by gel permeation chromatography (GPC) that is 200 or greater, more preferably 500 or greater and particularly preferred 1000 or greater. In addition, said number average molecular weight is 100,000 or smaller, more preferably smaller than 80,000 and particularly preferred the number average molecular weight of the polysiloxane compound (B) is 50,0000 or smaller. The molecular weight of the compound (B) is determined by GPC using a polystyrene standard. The GPC columns used are TSKgel G400Hxl, TSKgel G300Hxl, TSKgel G2000Hxl, and TSKgel G2000Hxl (all made by TOSO corporation, Japan) with tetrahydrofurane (THF) as solvent. The flow rate is 1.0 ml/min. and the temperature is set at 40 °C. Refractive index (RI) spectrometric detection is used.
The polysiloxane used as the component (B) in the present invention may be hereinafter called "polysiloxane (B)". As examples, dimethyl silicone oil and modified silicone oils thereof can be given. As examples of modified silicone oils, epoxy-modified, alkylaralkyl-modified, alkyl-modified, amino-modified, carboxyl-modified, alcohol-modified, fluorine-modified, alkylaralkyl polyether-modified, epoxy ether-modified, and polyether-modified silicone oils can be given. Among these, polyether-modified silicone oil is preferable in view of compatibility with the liquid resin composition. If the molecular weight is less than 200, the resulting cured product may exhibit inferior friction resistance; if more than 100,000, on the other hand, compatibility may become inadequate which may result in a turbid liquid resin.
The viscosity of the polysiloxane (B) used in the present invention is preferably 0.05-5 Pa·s at 25°C, still more preferably 0.07-4 Pa·s at 25°C, and particularly preferably 0.1-3 Pa·s at 25°C. Such polysiloxanes (B) ether may have or may not have reactivity, although polysiloxanes not having reactivity are preferred. As commercially available products, SH-28PA, SH-29PA, SH-30PA, SH-190 (manufactured by Dow Corning Toray Silicone Co., Ltd.), KF351, KF352, KF353, KF354 (manufactured by Shin-Etsu Chemical Co., Ltd.), L-700, L-7002, L-7500, FK-024-90 (manufactured by Nippon Unicar), and the like can be given. In addition to the components (A) and (B), polymerizable monomers such as polymerizable monofunctional or polyfunctional compounds can be added to the liquid curable resin composition of the present invention as the component (C). Given as examples of such polymerizable monofunctional compounds (C) are vinyl group-containing lactam such as N-vinylpyrrolidone and N-vinylcaprolactam, alicyclic structure-containing (meth)acrylates such as isobornyl (meth)acrylate, bornyl (meth)acrylate, tricyclodecanyl (meth)acrylate, dicyclopentanyl (meth)acrylate, dicyclopentenyl (meth)acrylate, and cyclohexyl (meth)acrylate, benzyl (meth)acrylate, 4-butylcyclohexyl (meth)acrylate, acryloylmorpholine, vinylimidazole, vinylpyridine, and the like. Further examples include 2-hydroxyethyl (meth)acrylate, 2-hydroxypropyl (meth)acrylate, 2-hydroxy-3-phenoxypropyl acrylate, 2-hydroxy butyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, iso-stearyl (meth)acrylate, tetrahydrofurfuryl (meth)acrylate, butoxyethyl (meth)acrylate, ethoxydiethylene glycol (meth)acrylate, benzyl (meth)acrylate, phenoxyethyl (meth)acrylate, polyethylene glycol mono(meth)acrylate, polypropylene glycol mono(meth)acrylate, methoxyethylene glycol (meth)acrylate, ethoxyethyl (meth)acrylate, methoxy polyethylene glycol (meth)acrylate, methoxy polypropylene glycol (meth)acrylate, diacetone (meth)acrylamide, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether, and compounds shown by the following formulas (4) to (6):

CH₂=C(R⁴)-COO(R⁵O)ₛ-R⁶ (4)

wherein R⁴ represents a hydrogen atom or a methyl group, R⁵ represents an alkylene group having 2-6, and preferably 2-4 carbon atoms, R⁶ represents a hydrogen atom or an alkyl group having 1-12, and preferably 1-9 carbon atoms, and s is an integer from 0 to 12, and preferably from 1 to 8; 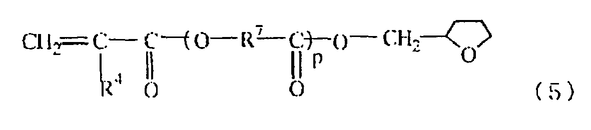 wherein R⁴ is the same as defined above, R⁷ represents an alkylene group having 2-8, and preferably 2-5 carbon atoms, and p is an integer from 0 to 8, and preferably from 1 to 4; 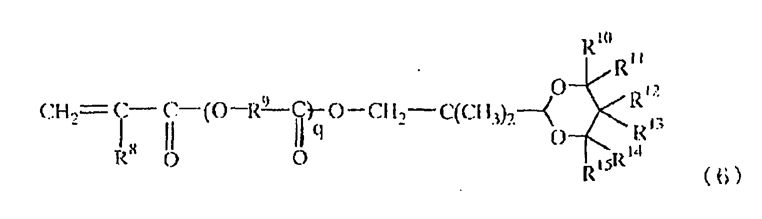 wherein, R⁸ represents a hydrogen atom or a methyl group, R⁹ represents an alkylene group having 2-8, and preferably 2-5 carbon atoms, R¹⁰ to R¹⁵ individually represent a hydrogen atom or a methyl group, and q is an integer from 0 to 8, and preferably from 1 to 4.

As examples of commercially available products of these monofunctional monomers, Aronix M-111, M-113, M-114, M-117 (manufactured by Toagosei Co., Ltd.), KAYARAD TC110S, R629, R644 (manufactured by Nippon Kayaku Co., Ltd.), and Viscoat 3700 (manufactured by Osaka Organic Chemical Industry Co., Ltd.) can be given.

Examples of polyfunctional monomers include trimethylolpropane tri(meth)acrylate, pentaerythritol tri(meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, neopentyl glycol hydroxypivalate, trimethylolpropanetrioxyethyl (meth)acrylate, tris(2-hydroxyethyl)isocyanurate tri(meth)acrylate, tris(2-hydroxyethyl)isocyanurate di(meth)acrylate, tricyclodecanedimethanol di(meth)acrylate, di(meth)acrylate of diol of ethylene oxide or propylene oxide adduct of bisphenol A, di(meth)acrylate of diol of ethylene oxide or propylene oxide adduct of hydrogenated bisphenol A, epoxy(meth)acrylate obtained by the addition of (meth)acrylate to diglycidyl ether of bisphenol A, triethylene glycol divinyl ether, and the like.

Examples of commercially available products of the above polymerizable polyfunctional monomers include Yupimer UV SA1002, SA2007 (manufactured by Mitsubishi Chemical Corp.), Viscoat 700 (manufactured by Osaka Organic Chemical Industry, Ltd.), Ripoxy VR-77 (manufactured by Showa Highpolymer Co., Ltd.), KAYARAD R-604, DPCA-20, DPCA-30, DPCA-60, DPCA-120, HX-620, D-31 0, D-330, MANDA (manufactured by Nippon Kayaku Co., Ltd.), ARONIX M-21 0, M-215, M-315, M-325 (manufactured by Toagosei Co., Ltd.), and the like. Of these, Ripoxy VR-77, KAYARAD MANDA, and Viscoat 700 are particularly preferable.

From the viewpoint of securing adequate flexibility and hygroscopic properties, the urethane (meth)acrylate (A) is added to the liquid curable resin composition of the present invention in an amount of 1 wt% or higher, preferably 2 wt% or higher, and particularly preferably 5 wt% or higher, based on the total amount of the components (A), (B), and (C). In addition, the amount of compound (A) is preferably 50 wt. % or less, more preferably 30 wt.% or less and particularly preferably 20 wt. % or less.

Based on the same standard, the polysiloxane (B) is added in an amount of 0.01 wt.% or higher, preferably 0.05 wt% or higher, more preferably 0.1 wt% or higher, particularly preferred 0.5 wt. % or higher and most preferred 1 wt. % or higher. Preferably the polysiloxane compound (B) is added in amount of 30 wt.% or less, more preferably in an amount of 10 wt. % or less, even more preferably in amount of 8 wt. % or less and particularly preferred in amount of 6 wt. % or less.

If the amount of the polysiloxane (B) is less than 0.01 wt%, the resulting cured products may adhere to each other when they are layered; if more than 30 wt%, on the other hand, compatibility may become inadequate which may result in a turbid liquid resin.

Based on the same standard, the polymerizable monomer (C) is added in an amount of 40 wt.% or more, preferably 50 wt.% or more, more preferably 60 wt.% or more, even more preferably 70 wt.% or more, particularly preferably 75 wt% or more, and most preferably 78 wt%. In addition, the polymerizable monomer (C) is added in an amount of 98.99 wt.% or less, more preferably in an amount of 95 wt.% or less and particularly preferably in an amount of 90 wt.% or less.

If less than 40wt.%, not only applicability of the composition is impaired due to increased viscosity, but also toughness of the cured product decreases and the cure shrinkage rate increases. If the amount exceeds 98.99%, toughness of the cured product may be impaired.

It is desirable that the liquid curable resin composition of the present invention further comprise a polymerization initiator as the component (D). As the polymerization initiator, a heat polymerization initiator or a photopolymerization initiator can be used.

When the liquid curable resin composition of the present invention is cured with heat, a heat polymerization initiator, usually, a peroxide or azo compound, is used. Specific examples include benzoyl peroxide, t-butyloxy benzoate, azobisisobutyronitrile, and the like.

When the liquid curable resin composition of the present invention is cured by radiation, a photopolymerization initiator is used. As required, it is desirable to use a photosensitizer in addition to the photopolymerization initiator. Examples of the photopolymerization initiator include 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyldiphenylphosphine oxide, bis-(2,6-dimethoxybenzoyl)-2,4,4-trimethylpentylphosphine oxide; IRGACURE 184, 369, 651, 500, 907, CGI1700, CGI1750, CGI1850, CG24-61; Darocur 1116, 1173 (manufactured by Ciba Specialty Chemicals Co., Ltd.); Lucirin TPO, LR8728 (manufactured by BASF); Ubecryl P36 (manufactured by UCB); and the like. Examples of photosensitizers include triethylamine, diethylamine, N-methyldiethanolamine, ethanolamine, 4-dimethylaminobenzoic acid, 4-methyl dimethylaminobenzoate, 4-ethyl dimethylaminobenzoate, 4-isoamyl dimethylaminobenzoate; Ubecryl P102, 103, 104, 105 (manufactured by UCB); and the like.

If both heat and ultraviolet light are used to cure the liquid curable resin composition of the present invention, heat polymerization initiator and photopolymerization initiator can be used in combination. The amount of the polymerization initiator to be added is in the range preferably from 0.1 to 10 parts by weight, and particularly preferably from 0.5 to 7 parts by weight, for 100 parts by weight of the composition.

In addition to the above components, other curable oligomers or polymers, reactive diluents, or other additives may be added to the liquid curable resin composition of the present invention as required, insofar as the characteristics of the liquid curable resin composition are not impaired.

As examples of other curable oligomers or polymers, polyester (meth)acrylate, epoxy (meth)acrylate, polyamide (meth)acrylate, a siloxane polymer having a (meth)acryloyloxy group, a reactive polymer obtained by reacting acrylic acid and a copolymer of glycidyl methacrylate and other vinyl monomers, and the like can be given.

Various additives such as antioxidants, coloring agents, UV absorbers, light stabilizers, silane coupling agents, heat polymerization inhibitors, leveling agents, surfactants, preservatives, plasticizers, lubricants, solvents, fillers, aging preventives, and wettability improvers, can also be added in addition to the above components, as required. Examples of antioxidants include IRGANOX1010, 1035, 1076, 1222 (manufactured by Ciba Specialty Chemicals Co., Ltd.), ANTIGENE P, 3C, FR, GA-80 (manufactured by Sumitomo Chemical Industries Co., Ltd.) and the like. Examples of UV absorbers include TINUVIN P, 234, 320, 326, 327, 328, 329, 213 (manufactured by Ciba Specialty Chemicals Co., Ltd.), Seesorb 102, 103, 501, 202, 712, 704 (manufactured by Sypro Chemical Co.), and the like. Examples of light stabilizers include TINUVIN 292, 144, 622LD (manufactured by Ciba Specialty Chemicals Co., Ltd.), Sanol LS770 (manufactured by Sankyo Co., Ltd.), Sumisorb TM-061 (manufactured by Sumitomo Chemical Industries Co., Ltd.), and the like. Examples of silane coupling agents include γ-aminopropyltriethoxysilane, γ-mercaptopropyltrimethoxysilane, γ-methacryloxypropyltrimethoxysilane, and the like, and commercially available products such as SH6062 and 6030 (manufactured by Toray-Dow Corning Silicone Co., Ltd.), and KBE903, 603, 403 (manufactured by Shin-Etsu Chemical Co., Ltd.).

The composition of the present invention is cured by heat or radiation. Radiation used herein includes infrared light, visible light, ultraviolet light, X-rays, electron beams, α-rays, β-rays, γ-rays, and the like. Preferably UV and UV -Vis light are used as means of radiation.

### PHYSICAL CHARACTERISTICS

The viscosity of the liquid curable resin compositions of the present invention is preferably from 0.1 to 100 Pa·s/25°C, more preferably from 0.2 to 50 Pa·s/25°C, still more preferably from 0.45 to 40 Pa·s/25°C and particularly preferably from 1.0 to 15 Pa·s/25°C.

Preferably, the Young's modulus at 23°C of the cured product obtained by curing the liquid curable resin composition of the present invention using radiation or heat is preferably from 1 to 250 kg/mm² for secondary coatings, ribbon matrix materials, bundling materials and ink coatings, more preferable from 10 to 200 kg/mm² and particularly preferably from 20 to 150 kg/mm². When the composition is used as a ribbon matrix material or a bundling matrix material for optical fibers, the Young's modulus of the composition after cure is normally about 10-200 kg/mm², and preferably about 20-150 kg/mm².

Elongation and tensile strength of these materials can also be optimized depending on the design criteria for a particular use. For cured coatings formed from radiation-curable compositions formulated for use as ribbon matrix material, bundling matrix material or radiation curable inks on optical fibers, the elongation-at-break is typically between 6% and 100%, and preferably higher than 10% and more preferred higher than about 15%.

The tensile strength of ribbon matrix materials, bundling matrix materials or radiation curable inks on optical fibers preferably is between 10 and 100 MPa, more preferred between 20 and 60 MPa and particularly preferred between 25 and 50 MPa.

The glass transition temperature (Tg), measured as the peak tan-delta determined by dynamic mechanical analysis (DMA), can be optimized depending on the particulars of the application. The glass transition temperature may be from 10ºC to 150ºC or higher, more preferably above 30ºC, for compositions designed for use as ribbon matrix material, bundling matrix material or ink coating. The ink coating generally has a T_{g} of at least about 25°C, more preferably at least about 40°C and particularly preferable at least about 60°C.

Ribbon structures or units can be made by having a plurality of coated optical fibers drawn side by side through a bath of liquid resin composition, often using a die, and curing the thin layer of matrix resin with e.g. UV light. Generally 2, 4, 8 or 12 optical fibers are bonded together in a ribbon. Generally, each optical fiber has a different color, which has been applied either by using a colored secondary coating, or by applying a UV-curable ink coating. Drawing speeds generally are between 1-30 m/s, preferably between 5-30 m/s.

Bundled ribbon structures can be made by drawing a plurality of ribbon units, generally either in a parallel or stacked configuration, through a bath of liquid resin composition, often using a die, and curing the thin layer of bundling material with e.g. UV light. Generally, between 2 and 30 ribbons are bundled in this way. Preferably, between 2 and 12 ribbons are bonded. Drawing speeds generally are between 1-20 m/s.

WO98/39264A discloses radiation-curable compositions which, after cure, are substantially non-yellowing. A preferred composition is based on a polyether type of oligomer diluted with diluents.

### EXAMPLES

The present invention will be described in more detail by examples, which are not intended to be limiting of the present invention. In the examples hereinafter "part(s) by weight" is simply described as "part(s)".

### Synthesis Example 1: Synthesis of urethane acrylate oligomer (A)

A reaction vessel equipped with a stirrer was charged with 16.7 parts of 2,4-tolylene diisocyanate, 0.024 part of 2,6-di-t-butyl-p-cresol, 0.08 part of dibutyltin dilaurate, and 0.008 part of phenothiazine. The mixture was cooled with ice to 10°C or below while stirring, 11.1 parts of 2-hydroxyethyl acrylate was added dropwise while controlling the temperature of the solution to 20°C or below, following which the mixture was reacted for one hour while stirring. 72.0 parts of ethylene oxide addition diol of bisphenol A having a number average molecular weight of 1500 (Uniol DA1500, manufactured by Nippon Oil and Fats Co., Ltd., a diol having a methyl group for R¹, a hydrogen atom for R², and m+n = about 30 in the formula (1)) was added and the mixture was stirred at 70-75°C for 3 hours. The reaction was terminated when the amount of the residual isocyanate was 0.1 wt% or less. The urethane acrylate thus obtained is referred to as UA-1.

### Synthesis Example 2: Synthesis of urethane acrylate oligomer (A)

A reaction vessel equipped with a stirrer was charged with 20.4 parts of isophorone diisocyanate, 0.024 part of 2,6-di-t-butyl-p-cresol, 0.08 part of dibutyltin dilaurate, and 0.008 part of phenothiazine. The mixture was cooled with ice to 10°C or below while stirring. 10.7 parts of 2-hydroxyethyl acrylate was added dropwise while controlling the temperature of the solution to 20°C or below, following which the mixture was reacted for one hour while stirring. After the addition of 68.9 parts of Uniol DA 1500 (manufactured by Mitsubishi Chemical Corp.), the mixture was stirred at 70-75°C for 3 hours. The reaction was terminated when the residual isocyanate was 0.1 wt% or less. The urethane acrylate thus obtained is referred to as UA-2.

### Synthesis Example 3: Synthesis of other urethane acrylate oligomer (1)

A reaction vessel equipped with a stirrer was charged with 35.5 parts of 2,4-tolylene diisocyanate, 0.024 part of 2,6-di-t-butyl-p-cresol, 0.08 part of dibutyltin dilaurate, and 0.008 part of phenothiazine. The mixture was cooled with ice to 10°C or below while stirring. 23.6 parts of 2-hydroxyethyl acrylate was added dropwise while controlling the temperature of the solution to 20°C or below, following which the mixture was reacted for one hour while stirring. Next, 40.8 parts of Uniol DA 400 which is an ethylene oxide addition diol of bisphenol A having a number average molecular weight of 400 (manufactured by Nippon Oil and Fats Co., Ltd.) was added and the mixture was stirred at 70-75°C for 3 hours. The reaction was terminated when the residual isocyanate was 0.1 wt% or less. The urethane acrylate thus obtained is referred to as UA-3.

### Synthesis Example 4: Synthesis of other urethane acrylate oligomer (2)

A reaction vessel equipped with a stirrer was charged with 13.5 parts of 2,4-tolylene diisocyanate, 0.024 part of 2,6-di-t-butyl-p-cresol, 0.08 part of dibutyltin dilaurate, and 0.008 part of phenothiazine. The mixture was cooled with ice to 10°C or below while stirring. 9.0 parts of 2-hydroxyethyl acrylate was added dropwise while controlling the temperature of the solution to 20°C or below, following which the mixture was reacted for one hour while stirring. After the addition of 77.4 parts of polytetramethylene glycol having a number average molecular weight of 2000 (PTMG 2000 manufactured by Mitsubishi Chemical Corp.), the mixture was stirred at 70-75°C for 3 hours. The reaction was terminated when the residual isocyanate was 0.1 wt% or less. The urethane acrylate thus obtained is referred to as UA-4.

### Examples 1-7 and Comparative Examples 1-4

A reaction vessel equipped with a stirrer was charged with the components listed in Table 1 and the mixture was stirred for 3 hours while controlling the temperature of 50 to 70°C to obtain a liquid curable resin composition.

**TABLE 1**

| Component/Evaluation | Example | | | | | | | Comparative Example | | | |
|---|---|---|---|---|---|---|---|---|---|---|---|
| | 1 | 2 | 3 | 4 | 5 | 6 | 7 | 1 | 2 | 3 | 4 |
| Component (A) | | | | | | | | | | | |
| UA-1 | 5.0 | 12.5 | 16.0 | 12.5 | | 12.5 | 10.6 | 12.5 | | | 12.5 |
| UA-2 | | | | | 12.5 | | | | | | |
| Urethane acrylate other than Component | | | | | | | | | | | |
| (A) | | | | | | | | | | | |
| UA-3 | | | | | | | | | 12.5 | | |
| UA-4 | | | | | | | | | | 12.5 | |
| Component (B) | | | | | | | | | | | |
| SH28PA¹⁾ | | | | 0.8 | 0.8 | | | | 0.8 | 0.8 | |
| SH190²⁾ | 3.1 | 3.1 | 3.1 | 2.3 | 2.3 | 1.0 | 5.0 | | 2.3 | 2.3 | |
| Leveling agent³⁾ | | | | | | | | | | | 3.1 |
| Polymerizable monomer | | | | | | | | | | | |
| Lauryl acrylate | 11.5 | 11.5 | 11.5 | 11.5 | 11.5 | 11.5 | 11.5 | 11.5 | 11.5 | 11.5 | 11.5 |
| Neopentyl glycol hydroxypivalate | 12.5 | 11.0 | 11.0 | 11.0 | 11.0 | 11.0 | 11.0 | 11.0 | 11.0 | 11.0 | 11.0 |
| VR-77⁴⁾ | | | | | | | | | | | |
| Aronix M113⁵⁾ | 45.4 | 39.4 | 37.4 | 39.4 | 39.4 | 40.5 | 39.4 | 42.5 | 39.4 | 39.4 | 39.4 |
| Polymerization initiator | 17.9 | 17.9 | 16.4 | 17.9 | 17.9 | 18.9 | 17.9 | 17.9 | 17.9 | 17.9 | 17.9 |
| Lucirin TPO⁶⁾ | | | | | | | | | | | |
| Irgacure 907⁷⁾ | 2.3 | 2.3 | 2.3 | 2.3 | 2.3 | 2.3 | 2.3 | 2.3 | 2.3 | 2.3 | 2.3 |
| | 2.3 | 2.3 | 2.3 | 2.3 | 2.3 | 2.3 | 2.3 | 2.3 | 2.3 | 2.3 | 2.3 |
| Liquid appearance | A⁸⁾ | A | A | A | A | A | A | A | B⁹⁾ | B | B |
| Surface smoothness (µm) | 0.8 | 0.7 | 0.7 | 0.4 | 0.4 | 0.5 | 0.8 | 0.3 | 1.6 | 1.6 | 1.2 |
| T-Peel strength (N/m) | 15 | 12 | 21 | 7 | 7 | 7 | 5 | 150 | 6 | 10 | 7 |

| | | | | | | | | | | | |
|---|---|---|---|---|---|---|---|---|---|---|---|
| Notes for Table 1 1) Polysiloxane having a number average molecular weight of 5700 manufactured by Toray-Dow Corning Silicone Co., Ltd. 2) Polysiloxane having a number average molecular weight of 37000 manufactured by Toray-Dow Corning Silicone Co., Ltd. 3) Liquid paraffin (manufactured by Wako Pure Chemical Co., Ltd., a special grade reagent, density: 0.871 g/cm³) 4) Epoxy acrylate manufactured by Showa Highpolymer Co., Ltd. 5) Nonyl phenol EO-modified acrylate manufactured by Toagosei Co., Ltd. 6) 2,4,6-Trimethylbenzoyldiphenylphosphine oxide manufactured by BASF 7) 2-Methyl-1-[4-(methylthio)phenyl]-2-morpholino-propan-1-one manufactured by Ciba Specialty Chemicals Co., Ltd. 8) "A" = liquid appearance "transparent" 9) "B" = liquid appearance "turbid" | | | | | | | | | | | |

The following evaluation methods were applied to the test items in Table 1.

### 1. Transparency of the liquid resin

The transparency of the liquid resin was evaluated by visual observation.

### 2. Surface smoothness of cured products

The liquid curable resin compositions were applied to glass sheets using an applicator bar for the preparation of films with a 250 □m thickness. The coatings were cured by irradiation of ultraviolet light at a dose of 1 J/cm² in the air, thereby producing test specimens. Surface smoothness of the test specimens was evaluated at 23°C using DIKTAK 3030, a diamond stylus (manufactured by ULVAC Japan, Limited) (a tip radius: 12.5 µm, stylus pressure: 0.1 mN).

### 3. Adhesion of cured resin products

The T-peel strength was measured according to the following method, which is described in JIS K 6854-1 (or the corresponding method ISO 8510-1). The liquid curable resin compositions were applied to glass sheets using an applicator bar for the preparation of films with a 150 µm thickness. The applied compositions were irradiated with ultraviolet light at a dose of 0.1 J/cm² in air to obtain two sheets of cured film for testing. Immediately after curing, the sheets were adhered with the irradiated surfaces face-to-face and allowed to stand at 23°C and the sheets were pressurized by weight using a glass plate at 1.3 x 10⁻⁴ MPa for 24 hours. The adhered cured material was cut into strips with a width of 1 cm to obtain test specimens for evaluation of T-peel strength. The T-peel strength test was carried out at 23°C and 50% RH at a drawing speed of 100 mm/min.

In the evaluation items in Table 1, the liquid resin compositions exhibiting a transparent appearance by visual observation, producing cured products having a surface smoothness in terms of roughness on the surface of less than 1 µm, and producing cured products exhibiting adhesion in terms of T peel strength of 40 N/m or less were respectively deemed to be satisfactory and acceptable resin compositions.

As clear from Table 1, the liquid curable resin composition of the present invention is transparent and produces cured products which exhibit superior surface smoothness and a small adhesion force. On the other hand, the resin composition of Comparative Example 1 which does not contain the component (B) polysiloxane produced a cured product with a high adhesion force, although the composition exhibited excellent liquid properties and produced cured products with superior surface smoothness. The resin compositions of Comparative Examples 2 and 3 containing urethane (meth)acrylate made from monomers which do not satisfy the requirements for the component (A), in terms of diols, were turbid in appearance and produced cured products with inadequate surface smoothness.

The liquid curable resin composition of the present invention has a low viscosity, is transparent, and produces cured products with a smooth surface. The composition is therefore useful as a covering material for wood, plastics, metals, and optical fibers, particularly as a bundling material for optical fibers.

## Claims

1. A liquid curable resin composition comprising:
(A) a urethane (meth)acrylate, obtained by the reaction of
(i) a diol compound represented by the following formula (1), 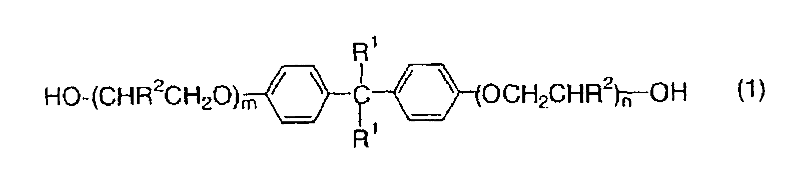 wherein R¹s individually represent a hydrogen atom or a methyl group, R²s individually represent a hydrogen atom, a methyl group, or a propyl group, and m and n individually is a number from 5 to 95, provided that the total of m and n is 20-100,
(ii) a diisocyanate compound, and
(iii) a hydroxyl group-containing (meth)acrylate compound,
(B) a polysiloxane having a number average molecular weight of 200 100,000, and
(C) a monomer polymerizable with the urethane (meth)acrylate (A).

2. The liquid curable resin composition, according to claim 1, wherein said composition comprises:
1-50 wt.% of compound (A),
0.01-30. wt% of compound (B), and
40-98.99 wt% of compound (C)
relative to the total amount of 100 % of the components (A), (B), and (C).

3. The liquid curable resin composition, according to any one of claims 1-2, wherein said composition comprises:
1-20 wt.% of compound (A),
0.01-10. wt% of compound (B), and
70-98.99 wt% of compound (C)
relative to the total amount of 100 % of the components (A), (B), and (C).

4. The liquid curable resin composition according to claim 1, further comprising
(D) a polymerization initiator.

5. The liquid curable resin composition according to claim 3, wherein the amount of compound (D) is present in the liquid curable resin composition in the amount of 0.1-10 wt. % for 100 wt.% of the total of the components (A), (B), and (C).

6. The liquid curable resin composition, according to anyone of claims 1-5, wherein compound (B) is polyether-modified silicone oil.

7. The liquid curable resin composition according to any one of claims 1-6, when cured exhibiting a T-peel strength of 40 N/m or less when measured according to ISO 85101.

8. A cured coating produced by curing the liquid curable resin composition according to any one of claims 1 to 7.

9. A cured coating according to claim 8, wherein said cured coating is a ribbon matrix material or bundling matrix material.

10. A coated optical fiber comprising a cured coating, according claim 8.

11. A ribbon structure comprising at least two coated optical fibers as defined in claim 10.

12. A ribbon structure comprising at least two coated optical fibers and a ribbon matrix material according to claim 9.

13. A bundled ribbon structure comprising a plurality of ribbon structures as defined in claim 11.

14. A bundled ribbon structure comprising a plurality of ribbon structures and a bundling matrix material according to claim 9.

15. Use of the liquid curable resin composition, according to any one of claims 1-6, as a secondary coating composition, ink composition, ribbon matrix material or bundling matrix material for an optical fiber.

## Patentansprüche

1. Flüssige, härtbare Harzzusammensetzung, umfassend:
(A) ein Urethan(meth)acrylat, das erhalten wird durch die Reaktion von
(i) einer Diolverbindung, repräsentiert durch die folgende Formel (1) 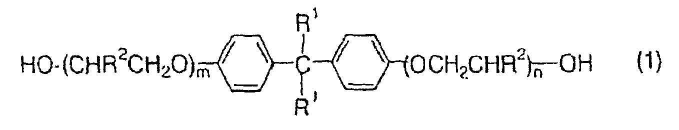 worin die R¹s einzeln für ein Wasserstoffatom oder eine Methylgruppe stehen, die R²s einzeln für ein Wasserstoffatom, eine Methylgruppe oder eine Propylgruppe stehen und m und n einzeln eine Zahl von 5 bis 95 bedeuten, mit der Maßgabe, dass der Gesamtbetrag von m und n 20 - 100 ist,
(ii) einer Diisocyanatverbindung und
(iii) einer Hydroxylgruppen-haltigen (Meth)acrylat-verbindung,
(B) ein Polysiloxan mit einem zahlenmittleren Molekulargewicht von 200 - 100 000 und
(C) ein Monomer, das mit dem Urethan(meth)acrylat (A) polymerisierbar ist.

2. Flüssige, härtbare Harzzusammensetzung gemäß Anspruch 1, wobei die Zusammensetzung folgendes umfasst:
1 - 50 Gew.-% von Verbindung (A),
0,01 - 30 Gew.-% von Verbindung (B) und
40 - 98,99 Gew.-% von Verbindung (C)
in Bezug auf die Gesamtmenge von 100 % der Komponenten (A), (B) und (C).

3. Flüssige, härtbare Harzzusammensetzung gemäß mindestens einem der Ansprüche 1 - 2, wobei die Zusammensetzung folgendes umfasst:
1 - 20 Gew.-% von Verbindung (A),
0,01 - 10 Gew.-% von Verbindung (B) und
70 - 98,99 Gew.-% von Verbindung (C)
in Bezug auf die Gesamtmenge von 100 % der Komponenten (A), (B) und (C).

4. Flüssige, härtbare Harzzusammensetzung gemäß Anspruch 1, ferner umfassend:
(D) einen Polymerisationsinitiator.

5. Flüssige, härtbare Harzzusammensetzung gemäß Anspruch 3, wobei die Menge von Verbindung (D) in der flüssigen, härtbaren Harzzusammensetzung in einer Menge von 0,1 - 10 Gew.-% für 100 Gew.-% des Gesamtbetrags der Komponenten (A), (B) und (C) vorliegt.

6. Flüssige, härtbare Harzzusammensetzung gemäß mindestens einem der Ansprüche 1 - 5, wobei die Verbindung (B) Polyether-modifiziertes Siliconöl ist.

7. Flüssige, Härtbare Harzzusammensetzung gemäß mindestens einem der Ansprüche 1 - 6, welche, wenn sie gehärtet ist, eine T-Schälfestigkeit von 40 N/m oder weniger besitzt, wenn gemäß ISO 85101 gemessen wird.

8. Gehärteter Überzug, hergestellt durch Härten der flüssigen, härtbaren Harzzusammensetzung gemäß mindestens einem der Ansprüche 1 bis 7.

9. Gehärteter Überzug gemäß Anspruch 8, wobei der gehärtete Überzug ein Bandmatrixmaterial oder Bündelmatrixmaterial ist.

10. Überzogene optische Faser, umfassend einen gehärteten Überzug gemäß Anspruch 8.

11. Bandstruktur, umfassend mindestens zwei überzogene optische Fasern, wie in Anspruch 10 definiert.

12. Bandstruktur, umfassend mindestens zwei überzogene optische Fasern und ein Bandmatrixmaterial gemäß Anspruch 9.

13. Gebündelte Bandstruktur, umfassend eine Vielzahl von Bandstrukturen, wie in Anspruch 11 definiert.

14. Gebündelte Bandstruktur, umfassend eine Vielzahl von Bandstrukturen und ein Bündelmatrixmaterial gemäß Anspruch 9.

15. Verwendung der flüssigen, härtbaren Harzzusammensetzung gemäß mindestens einem der Ansprüche 1 - 6 als eine sekundäre Überzugszusammensetzung, Tintenzusammensetzung, Bandmatrixmaterial oder Bündelmatrixmaterial für eine optische Faser.

## Revendications

1. Composition de résine liquide, durcissable, comprenant:
(A) un (méth)acrylate d'uréthane, obtenu grâce à la réaction entre
(i) un composé diol représenté par formule (1) suivante, 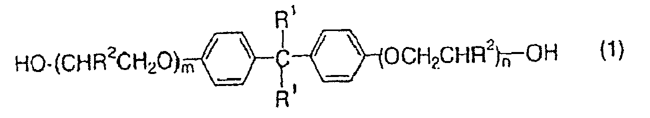 dans laquelle les radicaux R¹ représentent individuellement un atome d'hydrogène ou un groupe méthyle, les radicaux R² représentent individuellement un atome d'hydrogène, un groupe méthyle, ou un groupe propyle, et m et n sont individuellement des nombres de 5 à 95, sous réserve que le total de m plus n fasse 20-100,
(ii) un composé diisocyanate, et
(iii) un composé (méth)acrylate contenant un groupe hydroxyle,
(B) un polysiloxane ayant une masse moléculaire moyenne en nombre de 200 - 100 000, et
(C) un monomère polymérisable avec le (méth)acrylate d'uréthane (A).

2. Composition de résine liquide, durcissable, selon la revendication 1, dans laquelle ladite composition comprend :
1-50 % en poids de composé (A),
0,01-30 % en poids de composé (B), et
40-98,99 % en poids de composé (C),
rapporté à la quantité totale de 100% des constituants (A), (B) et (C).

3. Composition de résine liquide, durcissable, selon l'une quelconque des revendications 1-2, dans laquelle ladite composition comprend :
1-20 % en poids de composé (A),
0,01-10 % en poids de composé (B), et
70-98,99 % en poids de composé (C)
rapporté à la quantité totale de 100% des constituants (A), (B) et (C).

4. Composition de résine liquide, durcissable, selon la revendication 1, comprenant en outre
(D) un amorceur de polymérisation.

5. Composition de résine liquide, durcissable, selon la revendication 3, dans laquelle la quantité de composé (D) est présente dans la composition de résine liquide, durcissable, dans une proportion de 0,1-10 % en poids pour 100 % en poids du total des constituants (A), (B) et (C).

6. Composition de résine liquide, durcissable, selon l'une quelconque des revendications 1-5, dans laquelle le composé (B) est une huile de silicone modifiée par un polyéther.

7. Composition de résine liquide, durcissable, selon l'une quelconque des revendications 1-6, qui présente, une fois durcie, une résistance au pelage en T de 40 N/m ou moins, lorsqu'on la mesure selon ISO 85101.

8. Revêtement durci produit par durcissement de la composition de résine liquide, durcissable, selon l'une quelconque des revendications 1 à 7.

9. Revêtement durci selon la revendication 8, dans lequel ledit revêtement durci est un matériau de matrice pour rubans ou un matériau de matrice pour faisceaux.

10. Fibre optique revêtue comprenant un revêtement durci, selon la revendication 8.

11. Structure en ruban comprenant au moins deux fibres optiques revêtues telles que définies dans la revendication 10.

12. Structure en ruban comprenant au moins deux fibres optiques revêtues et un matériau de matrice pour rubans selon la revendication 9.

13. Structure en faisceau de rubans comprenant une pluralité de structures en ruban telles que définies dans la revendication 11.

14. Structure en faisceau de rubans comprenant une pluralité de structures en ruban et un matériau de matrice pour faisceaux selon la revendication 9.

15. Utilisation de la composition de résine liquide, durcissable, selon l'une quelconque des revendications 1-6, en tant que composition de revêtement secondaire, composition d'encre, matériau de matrice pour rubans ou matériau de matrice pour faisceaux de fibres optiques.
